(19) Europäisches Patentamt / European Patent Office / Office européen des brevets

(11) **EP 3 575 085 A1**

(12) **EUROPEAN PATENT APPLICATION**

(43) Date of publication:
04.12.2019 Bulletin 2019/49

(21) Application number: **19175926.5**

(22) Date of filing: **22.05.2019**

(51) Int Cl.:
**B32B 27/08** (2006.01)  **B32B 27/18** (2006.01)
**B32B 27/20** (2006.01)  **B32B 27/32** (2006.01)
**C08J 5/18** (2006.01)  **C08K 3/26** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.05.2018  IT 201800005872**

(71) Applicant: **Irplast S.p.A.**
**50053 Empoli (FI) (IT)**

(72) Inventors:
• **SANTILLI, Fausto**
**66038 San Vito Chietino (Chieti) (IT)**
• **DE BARTOLO, Luca**
**46012 Bozzolo (Mantova) (IT)**

(74) Representative: **Rossetti, Elena**
**BUGNION S.p.A.**
**Via di Corticella 87**
**40128 Bologna (IT)**

(54) **POLYOLEFIN FILM FOR ENVELOPES WITH WINDOWS**

(57)     Described is a bi-oriented polyolefin film comprising at least one B layer comprising at least one propylene polymer and 2.0-5.0% by weight of carbonate of at least one alkaline or alkaline earth metal, wherein the carbonate has average particle diameter d(50) of less than or equal to 2.0 micron.

EP 3 575 085 A1

**Description**

**FIELD OF THE INVENTION**

This invention relates to a polyolefin film and its use for making windows for envelopes.

**BACKGROUND ART**

To make transparent windows for envelopes use is generally made of polystyrene, polyethylene terephthalate or polylactic acid plastic films, the polystyrene being the most widely used material for this purpose.
Polypropylene-based films have recently been developed for this particular application. Patent application EP2832541A1 describes plastic films comprising at least two layers wherein the central layer consists mainly of polypropylene and the outer layer consists of a material compatible with the adhesives used for coupling the windows to the envelopes; these materials can be elected between ethylene vinyl acetate, ethylene butyl acrylate, ethylene methyl acrylate, ethylene ethyl acrylate, ethylene/acrylic acid copolymers and propylene/ethylene/butene terpolymers.
Patent EP3120989B1, by this Applicant, describes multilayer polyolefin films for making windows for envelopes, wherein the central layer contains a polypropylene homopolymer, both the outer layers of the film contain a propylene copolymer, wherein the propylene copolymer of the layer of the film facing towards the outside of the envelope is mixed with HDPE.
The polystyrene-based films and the polyolefin films allow windows to be made for envelopes which are sufficiently transparent for visual inspection of the contents of the envelope and/or for non-assisted optical reading of text present on the portion of the contents of the envelope visible from the outside of it. However, they have the drawback of not allowing an optimum optical reading of markings present on the portion of the contents of the envelope which is visible through the window, for example the optical reading of bar codes or QR codes.
More specifically, the Applicant has noted that in the envelopes with windows made from polyolefin films the legibility through the window of markings present on the contents of the envelope is difficult when the window moves away from the content of the envelope by more than 2 mm. In this context, the present disclosure aims to provide a plastic film suitable for making windows for envelopes, which allows easy reading through the window of markings present on the content of the envelope by means of optical readers. In the context of this technical purpose, an aim of the invention is to provide a plastic film which allows an optical reader to correctly read said markings even when the window moves away from the contents of the envelope.
Furthermore, the present disclosure provides a plastic film which, when overcoming the above-mentioned problem, maintains good mechanical characteristics, e.g. resistance to tearing.

**SUMMARY OF THE INVENTION**

According to a first aspect, the invetion relates to bi-oriented polyolefin film comprising at least one B layer comprising at least one propylene polymer (P1) and 2.0-5.0% by weight of carbonate of at least one alkali or alkaline earth metal, wherein the carbonate has an average particle diameter d(50) of less than or equal to 2.0 micron.
According to a further aspect, the invention relates to the use of a bi-oriented polyolefin film as described above for making windows in a packaging element, as well as a packaging element, preferably made of paper and/or cardboard, comprising at least one window made with a bi-oriented polyolefin film as described above.
The Applicant has surprisingly found that the bi-oriented polyolefin film disclosed whilst containing a certain quantity of inorganic compounds, preferably but not exclusively a certain quantity of calcium carbonate, is characterised by values of haze and clarity which render it particularly suitable for making windows in packaging elements, such as, for example, windows in envelopes.
The packaging elements comprising at least one window made with the bi-oriented film according to the invention allow an easy optical reading of the markings present on the material contained inside the packaging, even when the film which constitutes the window moves away from the inner material bearing the marking.

**DETAILED DESCRIPTION OF THE INVENTION**

In the context of this disclosure, the percentages are expressed in weight unless otherwise indicated.
In the context of the present disclosure, the terms "bi-oriented" and "biaxially oriented" are used as synonyms.
In the context of the present disclosure, low-density polyethylene (LDPE) is referred to an ethylene polymer with a high content of long branched chains, generally obtained or obtainable by high pressure radical polymerization.
In the context of the present disclosure, linear low-density polyethylene (LLDPE) is an ethylene polymer with a reduced content of long branched chains and a high content of short branches, when compared to low-density polyethylene (LDPE).

According to a first aspect, the disclosure relates to bi-oriented polyolefin film comprising at least one B layer comprising at least one propylene polymer (P1) and 2.0-5.0% by weight of carbonate of at least one alkaline or alkaline earth metal, wherein the carbonate has an average particle diameter d(50) of less than or equal to 2.0 micron.

The propylene polymer (P1) can be preferably selected from the group consisting of propylene homopolymers, copolymers of propylene with at least one comonomer selected from the group consisting of ethylene, linear or branched C4-C12 alpha-olefins, and combinations thereof, wherein said copolymers of the propylene have a copolymerized comonomer content equal to or less than about 2.0% by weight with respect to the weight of the copolymer.

In one embodiment. the propylene polymer can be a propylene-ethylene random copolymer having a copolymerized ethylene content equal to or less than about 2.0% by weight with respect to the copolymer, preferably equal to or less than about 1.0% by weight, preferably equal to or less than about 0.8% by weight; the lower limit being 0.2% by weight in all cases.

According to a preferred embodiment, the layer B may comprise a propylene homopolymer.

The propylene polymer (P1), preferably the propylene homopolymer, may have at least one of the following properties, preferably all the following properties:

- melting temperature (Tf) greater than or equal to about 140°C, preferably greater than or equal to about 160°C; and/or
- MFR (ISO 1133: 230°C/2.16 kg) of about 0.5-10 g/10 min, preferably of about 1-5 g/10 min.

Optionally, the layer B may further comprise at least one amorphous hydrocarbon resin (H1). Said amorphous hydrocarbon resin (H1) can have a softening point of about 130°-180°C, more preferably of about 130°-160°C, determined according to ASTM E28. Preferably, the hydrocarbon resin has low molecular weight, wherein the number average molecular weight can be between 200-1000. According to an embodiment, the amorphous hydrocarbon resin can be selected among resins obtained or obtainable from the polymerization of styrene, methylstyrene, vinyl toluene, indene, pentadiene, cyclopentadiene and their mixtures.

Hydrogenated resins are preferred, in particular hydrogenated cyclopentadiene resins. The amorphous hydrocarbon resin can be mixed in the molten state with the at least one propylene polymer (P1) in the form of masterbatch, wherein the quantity of resin can be about 40-60% by weight with respect to the total weight of the masterbatch, the remaining part being a polymer of propylene, preferably a propylene homopolymer. Generally, the layer B can comprise about 0-20 % by weight, preferably 10-20% by weight of masterbatch, preferably about 12-15%, with respect to the total weight of the layer B.

According to a further embodiment, the layer B can comprise a quantity less than or equal to about 15% by weight with respect to the total weight of the layer B, preferably 0-15% by weight, preferably about 10-15% by weight, of at least one re-granulated polymer of propylene (R1). The re-granulated propylene polymer can be obtained from mechanical recycling operations of at least one propylene polymer. The re-granulated propylene polymer can be used in the layer B only if it does not alter the optical and/or mechanical properties of the film according to the invention. Preferably, the layer B can comprise at least one re-granulated polymer of propylene obtained from the mechanical recycling operations of a polyolefin film having the same composition as the layer B.

Optionally, the layer B can comprise at least one additive (A1) selected from the group consisting of antistatic agents, slipping and/or anti-blocking agents, and combinations thereof.

For example, the antistatic agents may be selected among glycerol monostearate, tertiary aliphatic amines with saturated linear chains containing aliphatic radicals C10-C20, optionally replaced with groups with alkyl ω-hydroxide-(C1-C4) groups. Amongst the tertiary amines there are N,N-bis(2-hydroxyethyl) alkylamines containing alkyl groups C10-C20, preferably C12-C18. The quantity of the additive (A1), preferably of the antistatic agent, is preferably between 1000 and 2000 ppm with respect to the weight of the layer.

The slipping and/or anti-blocking agent can be preferably selected among inorganic slipping and/or anti-blocking agents, more preferably it can be silica, optionally in the form of particles having an average dimension of about 2 to 8 μm, preferably about 3-5 μm.

The layer B can comprise about 0-10 % by weight, preferably 0.5-7% by weight, with respect to the total weight of the layer, of at least one masterbatch comprising about 3-20% by weight of the additive (A1).

The bi-oriented polyolefin film comprises in the layer B about 2.0-5.0% by weight, preferably from more than 2.0 to 5.0 % by weight, preferably about 2.5 - 5.0% by weight, more preferably about 3.0-4.5% by weight, preferably from more than 3.0 to 4.5% by weight, of carbonate of at least one alkali or alkaline earth metal having an average particle diameter d(50) of less than or equal to about 2.0 microns, said percentage being calculated with respect to the total weight of the layer B.

The carbonate of an alkali or alkaline earth metal can be preferably selected from the group consisting of lithium carbonate, sodium carbonate, potassium carbonate, magnesium carbonate, calcium carbonate and combinations thereof. According to a particularly preferred embodiment the carbonate is calcium carbonate ($CaCO_3$).

The calcium carbonate can be a carbonate of natural origin (e.g. marble or gypsum) or synthetic calcium carbonate.

Preferably, the carbonate of at least one alkali or alkaline earth metal can have an average particle diameter d(50) in the range of about 0.5-2.0 microns, preferably in the range of about 0.7-1.5 microns, wherein the an average particle diameter d(50) represents the average diameter of the particles measured as indicated below.

The particles of carbonate of the at least one alkaline or alkaline earth metal have an average diameter d(50) as indicated above, that is to say, 50% by volume of the particles have average particle diameter of less than or equal to about 2.0 microns, preferably 50% by volume of the particles can have average particle diameter less than or equal to a value comprised between about 0.5 and about 2.0 microns, preferably between about 0.7 and about 1.5 microns.

As shown for example in patent document EP3272524, the carbonate, in particular the calcium carbonate, is generally used in the production of films as cavitating agent, that is to say, as an agent which is able to favour the formation of voids inside the polymer during stretching. Generally, calcium carbonate is used for this purpose, or, more generally, an additive which is incompatible with the plastic material, with a quantity of greater than 5.0%. Moreover, in order to favour cavitation, the dimensions of the particles are greater than 2.0 microns.

The Applicant has found that when the quantity of carbonate having an average particle diameter d(50) of less than or equal to 2.0 microns added to the layer B is in the ranges indicated above, it is possible to obtain a multilayer bi-oriented film with optimum optical characteristics, which allows the optical reading of markings present on a material located beneath said film, even when the distance between the material bearing the marking and the film is high.

The carbonate of at least one alkali or alkaline earth metal can be mixed with the propylene polymer using technical means known in the field for mixing inorganic powders with plastic materials. Preferably, the mixing can be performed in a screw extruder which heats the polymer above its melting temperature.

According to a preferred embodiment, to favour the dispersion of the inorganic compound in the polymer, the carbonate of at least one alkali or alkaline earth metal can be mixed with the propylene polymer as a masterbatch. According to an embodiment, the masterbatch can comprise the carbonate of at least one alkali or alkaline earth metal in a total quantity of about 40-80% by weight, preferably about 65-75% by weight, with respect to the weight of the masterbatch dispersed in a polymeric matrix comprising a polymer of propylene.

According to an embodiment, the layer B may consist of:

(C) 5-10% by weight of a masterbatch comprising about 40-80% by weight, preferably about 65-75% by weight, of the carbonate of at least one alkali or alkaline earth metal, wherein the amount of carbonate with respect to the layer B is of 2.0-5.0% by weight, preferably 2.5-5.0% by weight, preferably 3.0-4.5% by weight;

(H1) 0-20% by weight, preferably 10-20% by weight, preferably 12-15% of a masterbatch comprising 40-60% by weight of at least one amorphous hydrocarbon resin;

(R1) 0-15% by weight, preferably 10-15% by weight, of at least one re-granulated polymer of propylene;

(A1) 0-10% by weight, preferably 0.5-10% by weight, of a masterbatch comprising about 3-20% by weight of the additive; and

(P1) an amount of the propylene polymer up to 100% by weight,

wherein the amounts of (C), (H1), (R1), (A1) and (P1) are referred to the total weight of (C)+(H1)+(R1)+(A1)+(P1).

The bi-oriented polyolefin film can comprise at least one further layer A laying on a surface of the at least one layer B, wherein said layer A can be as described below.

According to a preferred embodiment, the bi-oriented polyolefin film can comprise at least three layers A/B/C, wherein the A layer and the C layer comprise at least one polyolefin (P2).

According to an embodiment, the at least one polyolefin (P2) can be independently selected from the group consisting of:

- propylene polymers selected from the group consisting of propylene homopolymers, copolymers of propylene with at least one comonomer selected from the group consisting of ethylene, linear or branched C4-C12 alpha-olefins and combinations thereof, wherein said copolymers of the propylene have a copolymerised comonomer content of about 0.5-20% by weight with respect to the copolymer;
- ethylene polymers selected from the group consisting of ethylene homopolymers, ethylene copolymers with at least one comonomer selected among linear or branched C4-C12 alpha-olefins; and
- combinations thereof.

Preferably, the alpha olefin can be selected between butene, hexene, octene, decene and their combinations.

In propylene copolymers the alpha olefin can be preferably 1-butene.

The at least one propylene copolymer of the layer A and/or C can have a total content of copolymerised comonomer of preferably about 5-20% by weight, preferably of about 8-15% by weight. The total content of copolymerised comonomer is expressed in percentage terms as the total weight of the comonomer (or of the comonomers) with respect to the weight of the copolymer.

According to an embodiment, the at least one polyolefin (P2) can be selected among propylene/ethylene/butene terpolymers, propylene/butene/ethylene terpolymers and mixtures thereof, said terpolymers having a total content of copolymerised comonomer of about 8-15% by weight, with respect to the weight of the terpolymer.

In a further embodiment, the layer A and/or the layer C can comprise at least one polymer of propylene selected among homopolymers of propylene.

The at least one polymer of propylene comprised in the layer A and/or in the layer C can have an MFR (Melt Flow Rate) of about 1-30 g/10 min, preferably about 3-10 g/10 min.

According to an embodiment, the outer layer of the bi-oriented multilayer polyolefin film, that is to say, the layer of the multilayer bi-oriented film facing towards the outside when the bi-oriented multilayer film is used for making a window in a packaging element, does not comprise polymers of ethylene, in particular does not comprise HDPE.

The propylene polymers useful for making the A, B and/or C layers can be prepared by polymerisation with Ziegler-Natta catalysts or with catalysts based on metallocenes, according to processes known in the prior art and therefore not described further. Said polymers are also available on the market.

According to a further embodiment, the at least one polyolefin (P2) can be at least one ethylene polymer as described above. The alpha olefin can be selected between butene, hexene, octene, decene and their combinations. In ethylene copolymers the alpha-olefin can be preferably octene.

The ethylene copolymer may comprise an amount of less than or equal to about 50% by weight, preferably about 15-35%, more preferably about 20-30%, of at least one C4-C12 alpha-olefin as described above.

The ethylene polymers described above may further comprise at least one comonomer derived from at least one C4-C20 diene, preferably selected from a linear diene (preferably conjugated linear diene), a branched diene (preferably conjugated branched diene), a cyclic diene, a vinylcycloalkene, a vinyl aromatic diene, a heteroaromatic diene, a vinyl heteroaromatic diene and mixtures thereof. The term "heteroaromatic" refers, in the present disclosure, to an aromatic compound in which at least one carbon atom of the aromatic ring is substituted by a heteroatom selected from N, O and S. Optionally, at least one of the hydrogen atoms of the aromatic or heteroaromatic rings of the compounds described above may be substituted with at least one group selected from a linear or branched C1-C12 alkyl and a linear or branched C2-C12 alkenyl.

The conjugated diene may be selected from 1,3-butadiene, 2-methyl-1,3-butadiene, 1,3-pentadiene, 1,3-hexadiene, 1,3-octadiene, 2,4-decadiene and mixtures thereof. The non-conjugated diene may be selected from 1,4-hexadiene, 7-methyl-1,6-octadiene and mixtures thereof. The cyclic diene may be selected from cyclopentadiene, 5-ethylidene-2-norbornene and mixtures thereof. The vinylcycloalkene may be selected from 4-vinylcyclohexene, 1-vinylcyclohexene, 3-vinylcyclohexene and mixtures thereof. The vinyl aromatic diene may be styrene, divinylbenzene and mixtures thereof.

Preferably, the at least one comonomer deriving from at least one diene may be comprised in the ethylene polymers in quantities of about 0.05-25% by weight, preferably of about 0.05-10% by weight, more preferably of about 0.1-3% by weight.

The ethylene polymers may be prepared by polymerization with Ziegler-Natta catalysts or, and preferably, with metallocenes-based catalysts, according to processes known in the art. Said polymers are also available on the market.

In this further embodiment, the layer A and/or the layer C of the multilayer bi-oriented film comprising an ethylene polymer as described above do not comprise propylene polymers.

According to a preferred embodiment, the ethylene polymer may have density of less than or equal to about 0.940 g/cm$^3$, preferably of less than or equal to 0.910 g/cm$^3$, preferably equal to or less than about 0.900 g/cm$^3$, preferably about 0.860 - 0.900 g/cm$^3$, even more preferably about 0.870 - 0.900 g/cm$^3$.

The polymer (P2) comprised in layer A and/or the layer C, preferably in both layers, can be selected from the group consisting of LDPE, LLDPE and combinations thereof, said ethylene polymers having at least one of the features indicated above, preferably all the features indicated above. In a particularly preferred embodiment, the layer A and/or the layer C, preferably both, can comprise LLDPE.

The bi-oriented polyolefin film comprising an ethylene polymer in layer A and/or in layer C is endowed with the favorable optical properties indicated above and therefore allows an easy optical reading of the markings present on materials contained inside a packaging, when the film is used to realize a window in a packaging element.

The bi-oriented polyolefin film comprising an ethylene polymer, in preferably LLDPE, in layer A and/or in layer C is also endowed with a superior resistance to deformation when the markings present on the material contained inside the packaging element are obtained by means of inks containing organic solvents, in particular mineral or vegetal oils, such those used as solvents in the offset printing.

The A layer A and/or the C layer, preferably both, can comprise at least one slipping and/or anti-blocking agent (A2), Preferably the slipping and/or the anti-blocking agent (A2) may be selected among:

- organic slipping and/or anti-blocking agents, more preferably polymethyl methacrylate (PMMA), optionally in the form of spherical particles having an average diameter of about 2 to 8 $\mu$m, preferably about 4-7 $\mu$m;
- organo-inorganic slipping and/or anti-blocking agents, more preferably polyorganosiloxanes;
- inorganic slipping and/or anti-blocking agents, more preferably silica, optionally in the form of particles having an average dimension of about 2 to 8 $\mu$m, preferably about 3-5 $\mu$m; and
- mixtures thereof.

Since the slipping and/or anti-blocking agents (A2) are available on the market, the dimensions of the particles referred to are those indicated in the technical data sheets of the products, determined according to the methods indicated by the suppliers.

Generally, the slipping and/or anti-blocking agents (A2) can be added to the at least one polymer (P2) in the form of at least one masterbatch comprising about 3-20% by weight of the slipping and/or anti-blocking agents (A2), with respect to the weight of the masterbatch, the remaining part of the masterbatch being a propylene polymer.

According to an embodiment, the masterbatch comprising slipping and/or anti-blocking can be selected between Polybatch® ABVT 26 NSC (A. Schulman Inc.), Polybatch® ABVT 30 NSC (A. Schulman Inc.), Constab AB 06084 PPR (Constab Polyolefin Additives GmbH), Skiblock 10 (Ampacet Corp.) and their mixtures.

Preferably, the layer A and or the layer C can comprise about 1-20% by weight, preferably about 2-10% by weight, with respect to the total weight of the layer of the masterbatch comprising the slipping and/or anti-blocking agent (A2).

According to one embodiment, the layer A and/or the layer C may consist of the olefin polymer (P2) and of the masterbatch comprising the least one slipping and/or anti-blocking agent (A2).

In one embodiment the layer A and/or the layer C may consist of:

(A2) 0-20% by weight, preferably 1-20% by weight, preferably 2-10% by weight, of a masterbatch comprising 3-20% by weight of at least one slipping and/or anti-blocking agent with respect to the weight of the masterbatch, and
(P2) up to 100% by weight of the polyolefin as described above,

wherein the amount of (A2) and (P2) are referred to the total weight of (A2)+(P2).

The bi-oriented polyolefin film can be bi-oriented by simultaneous biaxial stretching, preferably by simultaneous biaxial flat stretching. Preferably, the bi-oriented film can be obtained by simultaneous biaxial flat stretching in longitudinal direction (MD) and transverse direction (TD).

It should be noted that the bi-oriented film of the instant disclosure cannot be obtained by sequential stretching, since the presence of a carbonate in the layer B, in particular of calcium carbonate, with the characteristics described above and in the quantity described above, causes the formation of micro-cavities in the polymer during the sequential stretching (cavitation), which alter the optical and mechanical properties of the film.

According to a further aspect, the disclosure relates to a preferred process for the production of the bi-oriented polyolefin film as described above, comprising the steps of:

(i) extruding the at least one layer B having the above-mentioned composition, thereby obtaining a sheet;
(ii) hardening the sheet on a roller at a temperature of about 10°-40 °C;
(iii) heating the sheet with heating elements kept at a temperature of about 100°-500°C;
(iv) subjecting the sheet to simultaneous biaxial stretching at a temperature of about 120°C - 210°C, with ratios of transversal stretching (TD) and longitudinal stretching (MD) independently selected within the range of 5.5-8.0, obtaining a bi-oriented film; and
(v) cooling the bioriented film.

During the step (i) the components comprised in the layer B are extruded in such a way as to form a sheet having a thickness of about 1 to 4 mm. If the polyolefin film is a multilayer film, step (i) comprises coextruding the layer B and the further layers.

The carbonate of at least one alkali or alkaline earth metal, and optionally the further additives, may be mixed with the polymers in suitable mixers before the extrusion step (i). Alternatively, and preferably, the mixing of said raw materials can occur during the step (i) using, for example, a twinscrew extruder. The mixing of the carbonate to the at least one polymer of the layer B must be such as to guarantee effective dispersion of the carbonate in the polymer, in such a way as to obtain a layer B with homogeneous dispersion of the carbonate (isotropic for carbonate concentration).

Subsequently, in step (ii) the sheet is hardened on a metal roller kept at a temperature of about 10°-40°C.

During the step (iii) the sheet is heated with radiant elements, preferably infrared, kept at a temperature of about 100°-500°C.

Subsequently, in step (iv) the sheet is subjected to simultaneous biaxial flat stretching. Preferably, in order to actuate step (iv) biaxial stretching on flat die filming process can be used, even more preferably the Lisim® (Linear Motor Simultaneous Stretching) technology can be used. This technology uses a simultaneous biaxial stretching process, for example as described US4,853,602 and successive patents. In Lisim® technology the edges of the sheet are attached to the stretching frame by means of a set of grippers or clamps independently guided by synchronous linear induction motors, each gripper or clamp sliding on a rail and being driven by at least one permanent magnet, pushed by the magnetic wave created by the polar expansions of the motors; each section of the stretching frame having a series of synchronous linear induction motors arranged in a contiguous fashion and powered by alternating current with modulated phase and frequency, so as to continuously vary the speed of the clamps (or grippers) and therefore the longitudinal stretching ratios of the film. The transversal stretching ratios are adjusted by intervening on the divergence of the rails on which the grippers or clamps slide. The Lisim® stretching technology is a technology which, during the stretching step, does not place the sheet and/or the film in contact with heated surfaces (e.g. metal rollers).

The stretching frame comprises one or more sections situated inside an oven, kept at a temperature of about 120°-210°C, preferably about 120°-180°C.

During the stretching step (iv), the longitudinal (MD) and transversal (MD) stretching ratios can be independently selected in the range of about 5.5 - 8.0.

The 'longitudinal stretching ratio' of (MD) is defined by the ratio between the outfeed speed of the film from the stretching frame (oven) and the input speed of the sheet entering stretching the frame (oven).

The 'transverse stretching ratio' (TD) is defined by the ratio between the width of the film at the outlet of the stretching frame (oven) and the width of the film entering the stretching frame (oven).

During the stretching step the linear speed of the film is varied slowly to prevent cavitation of the film. Advantageously, the linear acceleration in MD can be constant and have a value less than or equal to 0.50 m/s$^2$, preferably less than or equal to 0.45 m/s$^2$.

At the end of the step (iv), the bi-oriented film can be cooled using air or cooling rollers at a temperature of about 25° - 60°C (step (v)).

The bi-oriented polyolefin film can be heat-shrinkable or thermally stable in at least one direction (TD or MD). Preferably, the bi-oriented polyolefin film can be thermally stable in TD and/or in MD, more preferably it can be thermally stable in TD and in MD.

To obtain a bi-oriented film thermally stable in MD and/or in TD, the step (iv) of the process can comprise at least the following sub-steps:

(iv.b) subjecting the sheet to simultaneous biaxial stretching at temperature of about 120°-165°C, preferably of about 150°-160°C, setting the longitudinal (MD) and transversal (MD) stretching ratios to values independently selected in the range of about 5.5 - 8.0; and

(iv.c) stabilising the bi-oriented film at temperature of about 120° - 180°C, preferably of about 150° - 170°C, reducing the stretching ratio in MD and/or in TD by a value independently selected in the range 1-20% of the maximum value of the stretching ratio in the same direction used in step (iv.b).

The stabilisation of the film in MD can therefore be obtained by reducing the speed of the film in step (iv.c) with respect to the stretching speed used in step (iv.b).

Stabilisation of the film in TD can be obtained by suitably reducing the width of the film in step (iv.c) with respect to the maximum width of the film reached in step (iv.b).

According to an embodiment, the stretching ratios can be reduced by about 5-12% in MD and in TD.

Preferably, before the sub-step (iv.b) the process can comprise a further sub-step (iv.a) of heating the sheet to temperature of about 150° - 180°C, preferably of about 160° - 175°C, keeping constant the speed and the width of the sheet (i.e. keeping the stretching ratios in MD and TD both equal to 1).

At the end of the step (v) the external surfaces of the film can optionally be subjected to surface treatments known in the art to increase the surface energy of the film, such as, for example, corona or flame treatments.

The bi-oriented polyolefin film can have at least one of the following properties:

- an overall thickness of about 15-40 microns, preferably of about 20-35 microns; and/or
- density greater than or equal to 0.890 g/cm$^3$, preferably greater than or equal to 0.900 g/cm$^3$; and/or
- haze less than or equal to 70%, preferably less than or equal to 60%, more preferably less than or equal to 45%; and/or
- clarity greater than or equal to 40%, preferably greater than or equal to 60% more preferably greater than or equal to 70%; and/or
- transmittance greater than or equal to 80%, preferably greater than or equal to 90%; and/or
- Young's module greater than or equal to 2000 MPa, preferably greater than or equal to 2400 MPa; and/or
- ultimate elongation less than or equal to 160%, preferably less than or equal 140%.

According to a particularly preferred embodiment, the bi-oriented film can have all the properties described above.

According to an embodiment, the multilayer bi-oriented polyolefin film A/B/C can have at least one of the above-mentioned properties, preferably all the properties described above, and can also have at least one of the following properties, preferably all the following properties:

- be a symmetrical film, that is to say, a film wherein the composition and the thickness of the layer A and the layer C are the same; and/or
- the thickness of the layer A and of the layer C can be independently selected in the range of about 0.2-4.0 microns, preferably about 0.3-1.0 microns.

The multilayer bi-oriented film can comprise at least one further layer interposed between the layer A and the layer B and/or between the layer B and the layer C. According to an embodiment, the multilayer bi-oriented film can comprise 3-10 layers. Preferably, the multilayer bi-oriented film can comprise a total of 5 layers and have an A/X/B/Y/C structure; alternatively, it can comprise 7 layers and have an A/W/X/B/Y/Z/C structure.

The bi-oriented polyolefin film can be used in the production of windows in packaging elements, to allow inspection of the contents of said packaging element.

According to a further aspect, the present disclosure relates to the use of the bi-oriented polyolefin film as described above for making windows in a packaging element, said packaging element being preferably made of paper and/or cardboard.

Advantageously, the optical reading of the markings on the contents of the packaging element through a window consisting of the bi-oriented polyolefin film as described above in details is easy and precise even when the window shifts from the contents of the packing element.

Thus, the present disclosure refers to the use of the bi-oriented polyolefin film for making a window in a packaging element, said window allowing the optical reading of markings present on the material comprised inside the packaging when the distance between the material comprised inside the packaging and the window is from 0 mm to 200 mm, preferably from 0 mm to 150 mm, preferably from 0 mm to 100 mm.

At least one surface of the bi-oriented polyolefin film, preferably both, is compatible with the types of glue normally used in the sector for coupling plastic films to packaging elements, preferably to packaging elements made of paper and/or cardboard (e.g. H.B. Fuller Swift® Tak 1304). The use of the film bi-oriented polyolefin film does not therefore require variations to the standard production conditions used in the reference technological sector.

According to a further aspect, the disclosure refers to a packaging element comprising at least one window made with (or consisting of) a bi-oriented polyolefin film as described above.

The bi-oriented polyolefin film is particularly suited for making windows for envelopes, since, thanks to its mechanical-physical properties, it is possible to increase the production yield and minimise production wastes.

The resistance to cutting of the bi-oriented polyolefin film is sufficiently low to be able to be easily cut during production of the windows.

The resistance of the bi-oriented polyolefin film to tearing is sufficiently high to allow manual detachment of the window from the packaging element without breaking the film, therefore allowing the different packaging materials to be separated, favouring separated waste disposal and recycling of the latter.

According to a preferred embodiment, said packaging element is an envelope with a window.

The following examples are only for illustrative purposes and do not limit the scope of the invention in any way.

## EXAMPLES

The following measuring methods are used to determine the properties indicated in the description and in the examples.

Ash content: the ash content of a masterbatch corresponds to the nominal load of solid in the masterbatch.

Dimensions of carbonate particles: by means of an X-ray SediGraph, which determines the dimensions of the particles as a function of their sedimentation speed in a liquid having known properties (SediGraph, Micrometrics®).

MFR: ISO 1133 (230°C/2.16 kg).

Melting temperature: ISO 11357, melting temperature at peak, measured at second heating.

Total film thickness: cut from the sample under examination 10 samples with dimensions of 100x100 mm and weigh the 10 samples with an analytical balance. Determine the basic weight of each sample using the formula:

$$\text{basic weight } [g/m^2] = (\text{Weight of cut sheets } [g] \times 100)$$

determine the thickness of each sample using the formula:

$$thickness = basic\ weight/0.91.$$

Thickness of the layers of a multilayer film: the thickness of the layer (i) of multilayer film is calculated as the ratio between the hourly flow rate of the extruder of the polymer composition of the layer (i) and the sum of the hourly flow rates of each extruder of the components for making the various layers of the multilayer film, multiplied by the total thickness of the film calculated as described above.

Haze: ASTM D1003.

Clarity: ASTM D1746.

Gloss: ASTM D2457 measurement angle 45°.

Transmittance: ASTM D1003.

Young's modulus, Modulus of elasticity, Ultimate elongation, Elongation at break, Tensile strength at break: ASTM D882

**Examples 1 and 2**

Multilayer films having the composition indicated in Tables 1 and 2 have been obtained by co-extruding in an extruder operating in the conditions indicated in Table 3 a sheet having the same composition as the multilayer film and a total thickness of about 1.1 mm. The masterbatch containing calcium carbonate has been fed directly to the extruder.

The sheet has been hardened on a rotating roller with a linear speed of about 40 m/min. thermostat at about 38°C and immersed for a third of the volume of the roller in a tank of water at a temperature of 35°C.

The sheet has been heated by infrared panels at temperatures of between 220°C and 350°C.

Subsequently, the sheet was subjected to a simultaneous biaxial stretching on an LISIM® production line, under the operating conditions indicated in Table 4.

At the outlet from the stretching oven, each multilayer film has been cooled, trimmed, subjected to corona treatment on one of the two layers and to a flame treatment on the opposite side, and then wound on reels.

At the end of the multilayer film stretching process it had a total thickness of about 26.6 microns; both layer A and layer C each had a thickness of about 0.3 $\mu$m.

| Table 1 - Composition of film of Example 1 | | |
|---|---|---|
| | **% by weight** | **Component** |
| layer A | 95 | PP homopolymer H034SG (Reliance) |
| | 2.5 | masterbatch AB 06084 PPR (Constab) |
| | 2.5 | masterbatch Skiblock 10 (Ampacet Corp.) |
| | | |
| layer B | 93.5 | Moplen™ HP522H (LyondellBasell) |
| | 6.5 | masterbatch Pearl 2A (Ampacet Corp.) |
| | | |
| layer C | 95 | PP homopolymer H034SG (Reliance) |
| | 2.5 | masterbatch AB 06084 PPR (Constab) |
| | 2.5 | masterbatch Skiblock 10 (Ampacet Corp.) |

| Table 2 - Composition of film of Example 2 | | |
|---|---|---|
| | **% by weight** | **Component** |
| layer A | 95 | Adsyl 7624XCP (LyondellBasell) |
| | 2.5 | masterbatch AB 06084 PPR (Constab) |
| | 2.5 | masterbatch Skiblock 10 (Ampacet Corp.) |

(continued)

| Table 2 - Composition of film of Example 2 | | |
|---|---|---|
| | **% by weight** | **Component** |
| | | |
| layer B | 93.8 | Moplen™ HP522H (LyondellBasell) |
| | 6.2 | masterbatch Pearl 2A (Ampacet Corp.) |
| | | |
| layer C | 95 | Adsyl 7624XCP (LyondellBasell) |
| | 2.5 | masterbatch AB 06084 PPR (Constab) |
| | 2.5 | masterbatch Skiblock 10 (Ampacet Corp.) |
| | | |
| *PP homopolymer H034SG (Reliance)* | | |
| MFR | ASTM D1238 | 3 g/10min. (230°C/2.16 kg) |
| *Moplen™ HP522H (LyondellBasell) - polypropylene homopolymer* | | |
| melting temperature | ISO 11357-3(*) | 164.3 °C |
| MFR | ISO 1133-1 | 2.0 g/10min. |
| density | ISO 1183-1 | 0,900 g/cm3 |
| *Adsyl™ 7624XCP (LyondellBasell) - terpolymer C3/C2/C4* | | |
| density | ISO 1133-1 | 0.900 g/cm3 |
| MFR | ISO 1133-1 | 2.0 g/10 minutes |
| *masterbatch Pearl 2A (Constab)* | | |
| carrier | | PP homopolymer |
| load | | calcium carbonate |
| ash | | 70% by weight |
| Melt Index | ASTM D1238 | 10.0 g/10min. (230°C/2.16 kg) |
| apparent density | MDE-66 | 890 g/l |
| d(50) | | 1.4 microns |
| *masterbatch AB 06084 PPR (Constab)* | | |
| load | | PMMA |
| ash | | 5.0% by weight |
| *masterbatch Skiblock 10 (Ampacet Corp.)* | | |
| load | | synthetic silica |
| ash | | 10.0% by weight |
| (*) DSC method with scanning speed 20°C/min., nitrogen flow 50 ml/min. | | |

| Table 3 - Sheet extrusion conditions | | | |
|---|---|---|---|
| | layer A | layer B | layer C |
| Extrusion line temp. (°C) | 235 °-255° | 240 °-260° | 235 °-255° |
| Extrusion head temp. (°C) | 250 °C | | |

| Table 4 - Stretching conditions | | |
|---|---|---|
| stretching ratio (MD/TD) | | 5.60/6.72 |
| acceleration MD | mm/s2 | 400 |
| stretching ratio decrease (MD/TD) | % | 10/10 |
| pre-heating section temp. | °C | 172 °-174° |
| stretching section temp. | °C | 159° |
| stabilisation section temp. | °C | 164 °-169° |

**Comparative examples 3 and 4**

Multilayer film having the composition shown in the Tables 5 and 6 have been obtained in the same process conditions used for making the film of examples 1 and 2.

Both the films had a total thickness of about 27 microns; both layer A and layer C each had a thickness of about 0.3 μm.

| Table 5 - Composition of film of comparative example 3 | | |
|---|---|---|
| | **% by weight** | **Component** |
| layer A | 95 | Adsyl 7624XCP (LyondellBasell) |
| | 2.5 | masterbatch AB 06084 PPR (Constab) |
| | 2.5 | masterbatch Skiblock 10 (Ampacet Corp.) |
| *table 5 - follows* | | |
| layer B | 92.5 | Moplen™ HP522H (LyondellBasell) |
| | 7.5 | masterbatch Pearl 2A (Ampacet Corp.) |
| | | |
| layer C | 95 | Adsyl 7624XCP (LyondellBasell) |
| | 2.5 | masterbatch AB 06084 PPR (Constab) |
| | 2.5 | masterbatch Skiblock 10 (Ampacet Corp.) |

| Table 6 - Composition of film of comparative example 4 | | |
|---|---|---|
| | **% by weight** | **Component** |
| layer A | 95 | Adsyl 7624XCP (LyondellBasell) |
| | 2.5 | masterbatch AB 06084 PPR (Constab) |
| | 2.5 | masterbatch Skiblock 10 (Ampacet Corp.) |
| | | |
| layer B | 93.8 | Moplen™ HP522H (LyondellBasell) |
| | 6.2 | Multibatch® MP52236 (Dow Corning Co) |
| | | |
| layer C | 95 | Adsyl 7624XCP (LyondellBasell) |
| | 2.5 | masterbatch AB 06084 PPR (Constab) |
| | 2.5 | masterbatch Skiblock 10 (Ampacet Corp.) |
| | | |

(continued)

| Multibatch® MP52236 (Dow Corning Co) | | |
|---|---|---|
| load | | calcium carbonate |
| ash | ISO 3451 | 70% by weight |
| MFR | ISO 1133 | 21.0 g/10min. (230°C/5 kg) |
| apparent density | MDA 204 | 0.98 g/cm3 |
| d(50) | | > 2.0 $\mu$m |

**Comparative example 5**

A multilayer film was made using the process conditions of the preceding embodiments having the composition shown in example 1 of patent application EP3120989A1. The total thickness of the film was about 26.7 microns; layer A had a thickness of about 1.0 $\mu$m and layer C had a thickness of about 2.3 $\mu$m.

**Comparative example 6**

A single layer film made of polystyrene has been used, with a total thickness of about 29.0 microns, which normally used for making windows for envelopes.

The mechanical-physical and optical properties of the film produced in examples 1 and 2 according to the invention and in the comparative examples 4 to 6 are shown in Table 7.

**Table 7**

| | | Ex. 1 | Ex. 2 | Comp. 3 | Comp. 4 | Comp. 5 | Comp. 6 |
|---|---|---|---|---|---|---|---|
| gloss | % | 53 | 53 | 53 | 53 | 7(*) | 50 |
| haze | % | 40 | 40 | 45 | 48 | 80 | 21 |
| clarity | % | 80 | 80 | 67 | 65 | 9 | 39 |
| transmittance | % | 92 | 92 | 85 | 89 | 90 | 90 |
| Young's modulus | MPa | 2450 | 2450 | 2450 | 2400 | 2300 | 3240 |
| Ultimate elongation | % | 130 | 135 | 135 | 95 | 135 | 64 |
| (*) value measured on outer layer (matt layer) of film. | | | | | | | |

Optical reading test

The films obtained in examples 1-2 and in comparative examples 3-6 have been subjected to an optical reading test. Using a horizontal supporting surface, a QR-code printed on paper in black on a white background has been positioned beneath a sample of each film, simulating the optical reading condition of the code through the window of an envelope.

A camera for the optical reading of the QR-code has been positioned parallel to the surface at a fixed distance of about 150 mm.

The distance between the sample of each film and the QR-codes has been progressively increased from 0 to 100 mm moving each film parallel to the supporting surface in the direction of the camera.

The optical reading of the code has been performed at each movement.

In the following table the tick "✓" indicates that the QR-code has been read correctly by the camera. Where '○' is indicated, it means that the camera has not been able to read and recognise the code.

| Distance (mm) | Example 1 | Example 2 | Comp. 3 | Comp. 4 | Comp. 5 | Comp. 6 |
|---|---|---|---|---|---|---|
| 0 | ✓ | ✓ | ✓ | ✓ | ✓ | ✓ |
| 2 | ✓ | ✓ | ○ | ✓ | ○ | ✓ |

(continued)

| Distance (mm) | Example 1 | Example 2 | Comp. 3 | Comp. 4 | Comp. 5 | Comp. 6 |
|---|---|---|---|---|---|---|
| 5 | ✓ | ✓ | ○ | ✓ | ○ | ✓ |
| 10 | ✓ | ✓ | ○ | ○ | ○ | ○ |
| 15 | ✓ | ✓ | ○ | ○ | ○ | ○ |
| 25 | ✓ | ✓ | ○ | ○ | ○ | ○ |
| 50 | ✓ | ✓ | ○ | ○ | ○ | ○ |
| 100 | ✓ | ✓ | ○ | ○ | ○ | ○ |

**Example 7**

A multilayer film having the composition indicated in table 8 was obtained by co-extruding in an extruder operating in the conditions indicated in table 9 a sheet having the same composition as the multilayer film and a total thickness of about 1.1 mm. The masterbatch containing calcium carbonate was fed directly to the extruder.

The sheet was hardened on a rotating roller with a linear speed of about 40 m/min. thermostat at about 38°C and immersed for a third of the volume of the roller in a tank of water at a temperature of 35°C. The sheet was heated by infrared panels at temperatures of between 220°C and 350°C. Subsequently, the sheet was subjected to a simultaneous biaxial stretching on an LISIM® production line, under the operating conditions indicated in table 9.

At the outlet from the stretching oven, each multilayer film was cooled, trimmed, subjected to corona treatment on one of the two external layers and to a flame treatment on the opposite side, and then wound on reels.

At the end of the multilayer film stretching process it had total thickness of about 27 microns; layer A and layer C each had thickness of about 0.6 $\mu$m.

**Table 8**

| | wt. % | Component |
|---|---|---|
| | 96 | Affinity PF1140G (DOW) |
| layer A | 2.0 | masterbatch AB 06084 PPR (Constab) |
| | 2.0 | masterbatch Skiblock 10 (Ampacet Corp.) |
| | | |
| | 92.0 | Moplen™ HP522H (LyondellBasell) |
| layer B | 6.5 | masterbatch Pearl 2A (Ampacet Corp.) |
| | 1.5 | Masterbatch containing 13 wt.% of antistatic agent |
| | | |
| | 96 | Affinity PF1140G (DOW) |
| layer C | 2.0 | masterbatch AB 06084 PPR (Constab) |
| | 2.0 | masterbatch Skiblock 10 (Ampacet Corp.) |
| | | |
| *Affinity PF1 140G (DOW) - LLDPE* | | |
| melting point | ISO 11357 | 96.1°C |
| density | ASTM D792 | 0.897 g/cm$^3$ |
| MFR | ASTM D1238 | 1.6 (dg/min; 2.16 Kg/190°C) |

**Table 9**

| Sheet extrusion conditions | | | |
|---|---|---|---|
| | layer A | layer B | layer C |
| Extrusion line temp. (°C) | 205 °-255° | 240 °-260° | 205 °-255° |
| Extrusion head temp. (°C) | 225/250 °C | | |
| | | | |
| Stretching conditions | | | |
| stretching ratio (MD/TD) | | 5,6/7,2 | |
| acceleration MD | mm/s2 | 423 | |
| stretching ratio decrease | % | 10 | |
| pre-heating section temp. | °C | 176 | |
| stretching section temp. | °C | 160 | |
| stabilisation section temp. | °C | 167 | |

The properties of the film are listed in table 10.

**Table 10**

| | | Example 7 |
|---|---|---|
| gloss | % | 55 |
| haze | % | 35 |
| clarity | % | 85 |
| transmittance | % | 91 |
| Modulus of elasticity (MD/TD) | N/mm$^2$ | 2600/3000 |
| Tensile strength at break (MD/TD) | N/mm$^2$ | 130/180 |
| Elongation at break (MD/TD) | % | 150/100 |

Optical reading test

The film was subjected to the optical reading test as described above. The QR-code was read correctly by the camera up to a distance of 100 mm.

Resistance to solvents

The film was tested for the resistance to mineral oils and vegetal oils. One drop of a mineral oil and one drop of a linseed oil were dropped on the film of example 7. After 10 minutes the oils were removed from the film with a paper towel.

The portion of the film contacted with the oils was not altered; the surface was flat, smooth and with no wrinkles.

Claims

1. A bioriented polyolefin film comprising at least one layer B comprising at least one propylene polymer (P1) and 2.0-5.0% by weight of carbonate of at least one alkali or alkaline earth metal, wherein the carbonate has average particle diameter d(50) of less than or equal to 2.0 micron.

2. The bioriented polyolefin film according to claim 1, wherein the propylene polymer (P1) is selected from the group consisting of propylene homopolymers, copolymers of propylene with at least one comonomer selected from the group consisting of ethylene, linear or branched C4-C12 alpha-olefins, and combinations thereof, wherein the copolymers of the propylene have a copolymerised comonomer content equal to or less than 2.0% by weight with respect to the weight of the copolymer, preferably the propylene polymer (P1) is a propylene homopolymer.

3. The bioriented polyolefin film according to claim 1 or 2 comprising at least three layers A/B/C, wherein the layer A and the layer C comprise at least one polyolefin (P2) independently selected from the group consisting of:

- propylene polymers selected from the group consisting of propylene homopolymers, copolymers of propylene with at least one comonomer selected from the group consisting of ethylene, linear or branched C4-C12 alpha-olefins and combinations thereof, wherein said copolymers of the propylene have a copolymerised comonomer content of about 0.5-20% by weight;
- ethylene polymers selected from the group consisting of ethylene homopolymers, ethylene copolymers with at least one comonomer selected among linear or branched C4-C12 alpha-olefins; and
- mixtures thereof.

4. The bioriented polyolefin film according to any one of claims 1-3, wherein the at least one polyolefin (P2) is selected among propylene/ethylene/butene terpolymers, propylene/butene/ethylene terpolymers and mixtures thereof, said terpolymers having a total content of copolymerised comonomer of about 8-15% by weight with respect to the weight of the terpolymer.

5. The bioriented polyolefin film according to any one of claims 1-3, wherein the at least one polyolefin (P2) is an ethylene polymer having density of less than or equal to $0.940\,g/cm^3$, preferably of less than or equal to $0.910\,g/cm^3$, preferably equal to or less than $0.900\,g/cm^3$, preferably $0.860 - 0.900\,g/cm^3$, even more preferably $0.870 - 0.900\,g/cm^3$.

6. The bioriented polyolefin film according to claim 5, wherein the polyolefin (P2) comprised in layer A and/or in layer C, preferably in both layers, is selected from the group consisting of LDPE, LLDPE and combinations thereof, preferably the polyolefin (P2) is LLDPE.

7. The bioriented polyolefin film according to any one of claims 1-6, wherein the layer B comprises 2.5-5.0% by weight, preferably 3.0-4.5% by weight, of carbonate.

8. The bioriented polyolefin film according to any one claims 1 to 7, wherein the carbonate is selected from the group consisting of lithium carbonate, sodium carbonate, potassium carbonate, magnesium carbonate, calcium carbonate and combinations thereof, preferably the carbonate is calcium carbonate.

9. The bioriented polyolefin film according to any one of claims 1 to 8, wherein the carbonate has average particle diameter d(50) of 0.5-2.0 microns, preferably of 0.7-1.5 microns.

10. The bioriented polyolefin film according to any one of claims 1 to 9, wherein the polyolefin film is bioriented by simultaneous biaxial stretching, preferably by simultaneous biaxial flat stretching.

11. The bioriented polyolefin film according to any one of claims 1 to 10, wherein the film has at least one, preferably all, of the following properties:

- an overall thickness of 15-40 microns, preferably of 20-35 microns; and/or
- density greater than or equal to 0.890 g/cm3, preferably greater than or equal to 0.900 g/cm3; and/or
- haze less than or equal to 70%, preferably less than or equal to 60%, more preferably less than or equal to 45%; and/or
- clarity greater than or equal to 40%, preferably greater than or equal to 60% more preferably greater than or equal to 70%; and/or
- transmittance greater than or equal to 80%, preferably greater than or equal to 90%; and/or
- Young's module greater than or equal to 2000 MPa, preferably greater than or equal to 2400 MPa; and/or
- ultimate elongation less than or equal to 160%, preferably less than or equal 140%.

12. A process to produce the bioriented polyolefin film according to any of claims 1 to 11, comprising the steps of:

(i) extruding the at least one layer B, thereby obtaining a sheet;
(ii) hardening the sheet on a roller at a temperature of about 10°-40 °C;

(iii) heating the sheet with heating elements kept at a temperature of about 100°-500°C;

(iv) subjecting the sheet to simultaneous biaxial stretching at a temperature of about 120°-210°C, with ratios of transversal stretching (TD) and longitudinal stretching (MD) independently selected within the range of 5.5-8.0, obtaining a bi-oriented film; and

(v) cooling the bioriented film.

13. Use of a bioriented polyolefin film according to any of claims 1 to 11 for making windows in a packaging element, the packaging element being preferably made of paper and/or cardboard, wherein said window allows the optical reading of markings present on the material comprised inside the packaging when the distance between the material comprised inside the packaging and the window is from 0 mm to 200 mm, preferably from 0 mm to 150 mm, preferably from 0 mm to 100 mm.

14. A packaging element, preferably made of paper and/or cardboard, comprising a window obtained from a bioriented polyolefin film as described in any one of claims 1 to 11.

15. The packaging element according to claim 14, wherein the packaging element is a window envelope.

EP 3 575 085 A1

Europäisches
Patentamt

European
Patent Office

Office européen
des brevets

# EUROPEAN SEARCH REPORT

Application Number

EP 19 17 5926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 277 970 A (SCHUHMANN DETLEF E [DE] ET AL) 11 January 1994 (1994-01-11) | 1-11 | INV. B32B27/08 |
| A | * column 2, line 33 - column 4, line 2 * * column 5, line 34 - line 66 * * column 6, line 20 - line 46 * * column 6, line 63 - line 68 * * example 1 * * claims 1,2,8,9,12 * ----- | 12-15 | B32B27/18 B32B27/20 B32B27/32 C08J5/18 C08K3/26 |
| X | EP 1 493 560 A1 (TOHCELLO CO LTD [JP]) 5 January 2005 (2005-01-05) * paragraphs [0001], [0006], [0007], [0010], [0019], [0022], [0023], [0027] - [0029], [0032], [0038], [0039], [0042] * * paragraphs [0057] - [0067], [0074] - [0079] * * tables 1,2 * * claims 1,4,6,8 * ----- | 1-6,8-11 | |
| A | EP 3 120 989 A1 (IRPLAST SPA [IT]) 25 January 2017 (2017-01-25) * paragraphs [0001], [0007], [0011] - [0017], [0029] - [0033], [0039], [0043], [0049], [0059] - [0075] * * claims 1-15 * ----- | 12-15 | TECHNICAL FIELDS SEARCHED (IPC) B32B C08J C08K |
| A | US 5 468 563 A (REINERS ULRICH [DE] ET AL) 21 November 1995 (1995-11-21) * column 1, line 5 - line 8 * * page 1, line 24 - page 2, line 23 * * claims 1-8 * ----- | 1-15 | |

The present search report has been drawn up for all claims

| Place of search | Date of completion of the search | Examiner |
|---|---|---|
| The Hague | 10 October 2019 | Girard, Sarah |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 17 5926

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2019

| Patent document cited in search report | | Publication date | Patent family member(s) | | Publication date |
|---|---|---|---|---|---|
| US 5277970 | A | 11-01-1994 | DE | 4118572 A1 | 10-12-1992 |
| | | | EP | 0517109 A2 | 09-12-1992 |
| | | | US | 5277970 A | 11-01-1994 |
| | | | ZA | 9204110 B | 24-02-1993 |
| EP 1493560 | A1 | 05-01-2005 | CN | 1575974 A | 09-02-2005 |
| | | | DE | 602004009498 T2 | 24-07-2008 |
| | | | EP | 1493560 A1 | 05-01-2005 |
| | | | KR | 20050004119 A | 12-01-2005 |
| | | | TW | 200502096 A | 16-01-2005 |
| | | | US | 2006040100 A1 | 23-02-2006 |
| EP 3120989 | A1 | 25-01-2017 | EP | 3120989 A1 | 25-01-2017 |
| | | | ES | 2677568 T3 | 03-08-2018 |
| | | | HU | E038372 T2 | 29-10-2018 |
| | | | PL | 3120989 T3 | 28-09-2018 |
| | | | TR | 201809370 T4 | 23-07-2018 |
| | | | US | 2017021972 A1 | 26-01-2017 |
| US 5468563 | A | 21-11-1995 | AT | 146403 T | 15-01-1997 |
| | | | CA | 2121212 A1 | 17-10-1994 |
| | | | CZ | 286221 B6 | 16-02-2000 |
| | | | DE | 4312388 A1 | 20-10-1994 |
| | | | DE | 59401296 D1 | 30-01-1997 |
| | | | DK | 0620112 T3 | 09-06-1997 |
| | | | EP | 0620112 A1 | 19-10-1994 |
| | | | ES | 2095100 T3 | 01-02-1997 |
| | | | FI | 941726 A | 17-10-1994 |
| | | | GR | 3022411 T3 | 30-04-1997 |
| | | | HU | 218725 B | 28-11-2000 |
| | | | JP | H06320684 A | 22-11-1994 |
| | | | NO | 306556 B1 | 22-11-1999 |
| | | | PL | 173233 B1 | 27-02-1998 |
| | | | US | 5468563 A | 21-11-1995 |

EPO FORM P0459

For more details about this annex : see Official Journal of the European Patent Office, No. 12/82

**EP 3 575 085 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2832541 A1
- EP 3120989 B1
- EP 3272524 A
- US 4853602 A
- EP 3120989 A1